# EUROPEAN PATENT SPECIFICATION

(11) **EP 4 221 391 B1**
(45) Date of publication and mention of the grant of the patent: **26.02.2025**
(21) Application number: 20957257.7
(22) Date of filing: 16.10.2020
(51) Int. Cl.: H04W 72/04, H04W 72/23, H04W 74/08, H04L 1/08

(54) **COMMUNICATION METHOD AND APPARATUS**
KOMMUNIKATIONSVERFAHREN UND -VORRICHTUNG
PROCÉDÉ ET APPAREIL DE COMMUNICATION

(43) Date of publication of application: 02.08.2023
(73) Proprietor: Huawei Technologies Co., Ltd., Shenzhen, Guangdong 518129 (CN)
(72) Inventor: YU, Jian, Shenzhen, Guangdong 518129 (CN); YU, Yawei, Shenzhen, Guangdong 518129 (CN); GUO, Zhiheng, Shenzhen, Guangdong 518129 (CN)
(74) Representative: Isarpatent
(86) International application number: PCT/CN2020/121627
(87) International publication number: WO 2022/077479

(56) References cited:
- EP-A1- 3 780 860
- EP-A1- 3 787 332
- WO-A1-2019/213978
- WO-A1-2019/213979
- CN-A- 104 780 617
- CN-A- 111 466 127
- CN-A- 111 567 124
- CN-A- 111 567 124
- US-A1- 2020 288 509
- US-A1- 2020 383 134
- HUAWEI, HISILICON: "Consideration on RACH procedure in coverage enhancement", 3GPP DRAFT; R2-153357 CONSIDERATION ON RACH PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Beijing, China; 20150824 - 20150828, 15 August 2015 (2015-08-15), Mobile Competence Centre ; 650, route des Lucioles ; F-06921 Sophia-Antipolis Cedex ; France , XP050992425
- MEDIATEK INC.: "Paging message design for Rel-13 LC/CE UEs", 3GPP DRAFT; R1-154713_RAR DESIGN FOR REL-13 LC-MTC UES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Beijing, China; 20150824 - 20150828, 15 August 2015 (2015-08-15), Mobile Competence Centre ; 650, route des Lucioles ; F-06921 Sophia-Antipolis Cedex ; France , XP050994371

## Description

### TECHNICAL FIELD

This application relates to the field of wireless communication, and in particular, to a communication method and apparatus.

### BACKGROUND

In a wireless communication system, communication may be classified into different types based on different types of sending nodes and receiving nodes. Generally, sending information by a network device to a terminal is referred to as downlink (Downlink, DL) communication, and sending information by a terminal to a network device is referred to as uplink (Uplink, UL) communication. In a fourth generation (Fourth generation, 4G) wireless communication system and a fifth generation (Fifth generation, 5G) wireless communication system: a new radio access technology (New radio access technology, NR) system, to ensure that a terminal can successfully access a network, successful transmission of a message in each step in a random access procedure needs to be first ensured. Because downlink transmit power is high, and downlink coverage is usually better than uplink channel coverage, a coverage bottleneck usually occurs in an uplink. In the random access procedure, after successfully receiving random access response information delivered by the network device, the terminal needs to send a message 3 (message 3, Msg 3, or referred to as a third message or Msg 3 information) to the network device, and the message 3 is carried on a PUSCH channel.

In an existing communication system, a solution of repeatedly transmitting the Msg 3 is proposed for a coverage-limited terminal. For example, different coverage levels, for example, a coverage enhancement (Coverage enhancement, CE) mode A, namely, CEmodeA, and a coverage enhancement mode B, namely, CEmodeB, are defined for different types of terminals. In the random access procedure, when radio resource control (Radio Resource Control, RRC) connection has not been established, transmission of the Msg 3 is still indicated by using the random access response information, to be specific, indicated by using a random access response (Random Access Response, RAR) UL grant field in the RAR information. The random access response uplink grant RAR UL grant field includes a Msg 3 PUSCH repetition indication field "Number of Repetitions for Msg 3 PUSCH". For different coverage levels, quantities of indication bits of repeated transmissions are also different, and different maximum quantities of repeated transmissions may be indicated.

In a conventional technology, when the transmission of the Msg 3 is indicated, although a quantity of repeated transmissions is indicated, a quantity of bits of the RAR UL grant changes, and a quantity of occupied time-frequency resources is increased. In addition, a legacy terminal cannot identify newly defined RAR UL grant information.

Representative prior art disclosures in this technical field are WO 2019/213978 A1, WO 2019/213979 A1, US 2020/288509 A1 and CN 111 567 124 A.

### SUMMARY

This application provides a communication method, to resolve an existing problem that a large quantity of time-frequency resources are occupied for indicating a quantity of repeated transmissions of a Msg 3.

According to a first aspect, this application provides a communication method. The method may be performed by a terminal device or a chip used in the terminal device. The following provides descriptions by using an example in which the method is performed by the terminal device. A main process includes: The terminal device receives first information. The terminal device obtains first indication information based on a shared bit in the first information. The first indication information indicates a quantity of repeated transmissions of a third message Msg 3. The third message Msg 3 is a radio resource control RRC connection request in a random access procedure. The shared bit is shared by the first indication information and the first information. The terminal device determines the quantity of repeated transmissions of the third message based on the first indication information.

According to the method provided in the first aspect, after receiving the first information (the first information is information sent by a network device and the terminal device in the random access procedure in the conventional technology), the terminal device obtains the first indication information based on the shared bit in the first information. The first indication information may indicate the quantity of repeated transmissions of the Msg 3. The shared bit is shared by the first information and the first indication information. To be specific, when the first indication information is not carried, the shared bit may indicate information that needs to be carried by the first information. Therefore, according to the method provided in the first aspect, the terminal device can obtain, without increasing time-frequency resource overheads, the quantity of repeated transmissions of the Msg 3, to implement repeated transmission of the Msg 3 and avoid a problem of limited coverage of the terminal device.

In a possible implementation of the first aspect, the first indication information further indicates a type of repeated transmission of the Msg 3. The type of the repeated transmission includes a repetition type A and a repetition type B.

According to the method provided in the possible implementation of the first aspect, after determining that the Msg 3 needs to be repeatedly transmitted, the terminal device may further determine, based on the type of the repeated transmission that is indicated by the first indication information, a specific method for repeatedly transmitting the Msg 3, so that the Msg 3 can be repeatedly transmitted in a more flexible manner, to further improve stability of accessing a network by the terminal device and ensure normal communication.

In a possible implementation of the first aspect, that the terminal device determines the quantity of repeated transmissions of the third message based on the first indication information includes: The terminal device determines the quantity of repeated transmissions of the third message based on a first quantity of repeated transmissions that is indicated by the first indication information and a repeated transmission factor K.

In the method in this embodiment, to achieve an objective of simultaneously indicating two types of information, a quantity of bits that may be used as the shared bit and that are in the first information may be limited to some extent. To more flexibly set the quantity of repeated transmissions of the Msg 3, in the method provided in the possible implementation of the first aspect, a manner in which the repeated transmission factor K and the first indication information is combined to indicate a quantity of repeated transmissions is provided. There may be a plurality of manners of setting the repeated transmission factor. If it is determined, by using the first indication information, that repeated transmission can be performed, and a predefined quantity of repeated transmissions is set, a plurality of quantities of repeated transmissions may be flexibly set by using the repeated transmission factor K (or referred to as a scale factor), to improve flexibility of setting the quantity of repeated transmissions.

In a possible implementation of the first aspect, the repeated transmission factor K is included in the first indication information; the repeated transmission factor K is a predefined value; or the repeated transmission factor K is included in a received system message SIB. In an optional method, the repeated transmission factor K may be indicated in an SIB1 message.

In a possible implementation of the first aspect, the first information includes a modulation and coding scheme MCS field and/or a transmit power control TPC field.

In a possible implementation of the first aspect, if the first information is the MCS field, and a coverage level of the terminal device is a preset coverage level, the shared bit is one or two bits in most significant bits MSBs of the MCS field.

In a possible implementation of the first aspect, if the first information is the TPC field, and a coverage level of the terminal device is a preset coverage level, the shared bit is a least significant bit LSB or a most significant bit MSB of the TPC field.

In a possible implementation of the first aspect, the method further includes: The terminal device determines the coverage level based on reference signal received power RSRP.

According to a second aspect, this application further provides another communication method. The method may be performed by a network device or a chip used in the network device. The following provides descriptions by using an example in which the method is performed by the network device. A main process includes: The network device includes first indication information in a shared bit in first information. The first indication information indicates a quantity of repeated transmissions of a third message Msg 3. The third message Msg 3 is a radio resource control RRC connection request in a random access procedure. The shared bit is shared by the first indication information and the first information. The network device sends the first information to a terminal device.

In a possible implementation of the second aspect, the first indication information further indicates a type of repeated transmission of the Msg 3. The type of the repeated transmission includes a repetition type A and a repetition type B.

In a possible implementation of the second aspect, the method further includes: The network device includes a repeated transmission factor K in the first indication information, or includes a repeated transmission factor K in a system message SIB. The quantity of repeated transmissions of the third message is determined by using the first indication information and the repeated transmission factor K.

In a possible implementation of the second aspect, the first information includes a modulation and coding scheme MCS field and/or a transmit power control TPC field.

In a possible implementation of the second aspect, if the first information is the MCS field, and a coverage level of the terminal device is a preset coverage level, the shared bit is one or two bits in most significant bits MSBs of the MCS field.

In a possible implementation of the second aspect, if the first information is the TPC field, and a coverage level of the terminal device is a preset coverage level, the shared bit is a least significant bit LSB or a most significant bit MSB of the TPC field.

In a possible implementation of the second aspect, the method further includes: The network device determines the coverage level of the terminal device based on a reserved physical random access channel PRACH resource used by the terminal device; the network device determines the coverage level of the terminal device based on a quantity of PRACH repeated transmissions by the terminal device; or the network device determines the coverage level of the terminal device based on received power of a signal carried by the terminal device on a PRACH channel.

According to a third aspect, an embodiment of this application further provides a communication apparatus, including: a receiving unit, configured to receive first information; and a processing unit, configured to: obtain first indication information based on a shared bit in the first information, where the first indication information indicates a quantity of repeated transmissions of a third message Msg 3, the third message Msg 3 is a radio resource control RRC connection request in a random access procedure, and the shared bit is shared by the first indication information and the first information; and
determine the quantity of repeated transmissions of the third message based on the first indication information.

In a possible implementation of the third aspect, the first indication information further indicates a type of repeated transmission of the Msg 3. The type of the repeated transmission includes a repetition type A and a repetition type B.

In a possible implementation of the third aspect, a first determining unit is specifically configured to determine the quantity of repeated transmissions of the third message based on a first quantity of repeated transmissions that is indicated by the first indication information and a repeated transmission factor K.

In a possible implementation of the third aspect, the repeated transmission factor K is included in the first indication information; the repeated transmission factor K is a predefined value; or the repeated transmission factor K is included in a received system message SIB.

In a possible implementation of the third aspect, the first information includes a modulation and coding scheme MCS field and/or a transmit power control TPC field.

In a possible implementation of the third aspect, if the first information is the MCS field, and a coverage level of a terminal device is a preset coverage level, the shared bit is one or two bits in most significant bits MSBs of the MCS field.

In a possible implementation of the third aspect, if the first information is the TPC field, and a coverage level of a terminal device is a preset coverage level, the shared bit is a least significant bit LSB or a most significant bit MSB of the TPC field.

In a possible implementation of the third aspect, the communication apparatus further includes a second determining unit, configured to determine the coverage level based on reference signal received power RSRP.

According to a fourth aspect, an embodiment of this application further provides a communication apparatus, including: a processing unit, configured to include first indication information in a shared bit in first information, where the first indication information indicates a quantity of repeated transmissions of a third message Msg 3, the third message Msg 3 is a radio resource control RRC connection request in a random access procedure, and the shared bit is shared by the first indication information and the first information; and a sending unit, configured to send the first information to a terminal device.

In a possible implementation of the fourth aspect, the first indication information further indicates a type of repeated transmission of the Msg 3. The type of the repeated transmission includes a repetition type A and a repetition type B.

In a possible implementation of the fourth aspect, the processing unit is further configured to: include a repeated transmission factor K in the first indication information, or include a repeated transmission factor K in a system message SIB. The quantity of repeated transmissions of the third message is determined by using the first indication information and the repeated transmission factor K.

In a possible implementation of the fourth aspect, the first information includes a modulation and coding scheme MCS field and/or a transmit power control TPC field.

In a possible implementation of the fourth aspect, if the first information is the MCS field, and a coverage level of the terminal device is a preset coverage level, the shared bit is one or two bits in most significant bits MSBs of the MCS field.

In a possible implementation of the fourth aspect, if the first information is the TPC field, and a coverage level of the terminal device is a preset coverage level, the shared bit is a least significant bit LSB or a most significant bit MSB of the TPC field.

In a possible implementation of the fourth aspect, the processing unit is further configured to: determine the coverage level of the terminal device based on a reserved physical random access channel PRACH resource used by the terminal device; determine the coverage level of the terminal device based on a quantity of PRACH repeated transmissions by the terminal device; or determine the coverage level of the terminal device based on received power of a signal carried by the terminal device on a PRACH channel.

According to a fifth aspect, a communication apparatus is provided. The communication apparatus may be the terminal device in the foregoing method embodiment or a chip disposed in the terminal device. The communication apparatus includes a processor and an interface circuit, and optionally, further includes a memory. The memory is configured to store a computer program or instructions. The processor is coupled to the memory and the interface circuit. When the processor executes the computer program or the instructions, the communication apparatus is enabled to perform the method performed by the terminal device in the method embodiment of the first aspect.

According to a sixth aspect, a communication apparatus is provided. The communication apparatus may be the network device in the foregoing method embodiment or the chip disposed in the network device. The communication apparatus includes a processor and an interface circuit, and optionally, further includes a memory. The memory is configured to store a computer program or instructions. The processor is coupled to the memory and the interface circuit. When the processor executes the computer program or the instructions, the communication apparatus is enabled to perform the method performed by the network device in the method embodiment of the second aspect.

According to a seventh aspect, a computer program product is provided. The computer program product includes computer program code. When the computer program code is run, the method performed by the terminal device in the foregoing aspect is performed.

According to an eighth aspect, a computer program product is provided. The computer program product includes computer program code. When the computer program code is run, the method performed by the network device in the foregoing aspect is performed.

According to a ninth aspect, this application provides a chip system. The chip system includes a processor, configured to implement a function of the terminal device in the method in the foregoing aspect. In a possible design, the chip system further includes a memory, configured to store program instructions and/or data. The chip system may include a chip, or may include a chip and another discrete component.

According to a tenth aspect, this application provides a chip system. The chip system includes a processor, configured to implement a function of the network device in the method in the foregoing aspect. In a possible design, the chip system further includes a memory, configured to store program instructions and/or data. The chip system may include a chip, or may include a chip and another discrete component.

According to an eleventh aspect, this application provides a computer-readable storage medium. The computer-readable storage medium stores a computer program. When the computer program is run, the method performed by the terminal device in the foregoing aspect is implemented.

According to a twelfth aspect, this application provides a computer-readable storage medium. The computer-readable storage medium stores a computer program. When the computer program is run, the method performed by the network device in the foregoing aspect is implemented.

According to a thirteenth aspect, a communication system is provided. The communication system includes the network device and the terminal device in any one of the foregoing aspects.

### BRIEF DESCRIPTION OF DRAWINGS

FIG. 1 is a schematic diagram of a network architecture to which this application is applicable;
FIG. 2 is a schematic diagram of a random access procedure in a conventional technology;
FIG. 3 is a schematic flowchart of a communication method according to an embodiment of this application;
FIG. 4 is a schematic diagram of a structure of a communication apparatus according to an embodiment of this application;
FIG. 5 is a schematic diagram of a structure of another communication apparatus according to an embodiment of this application;
FIG. 6 is a schematic diagram of a structure of another communication apparatus according to an embodiment of this application;
FIG. 7 is a schematic diagram of a structure of a network device according to an embodiment of this application; and
FIG. 8 is a schematic diagram of a structure of a terminal device according to an embodiment of this application.

### DESCRIPTION OF EMBODIMENTS

The following describes in detail embodiments of this application with reference to the accompanying drawings.

Technical solutions in embodiments of this application may be applied to various communication systems, for example, a long term evolution (long term evolution, LTE) system, a fifth generation (5th generation, 5G) mobile communication system, and a future mobile communication system.

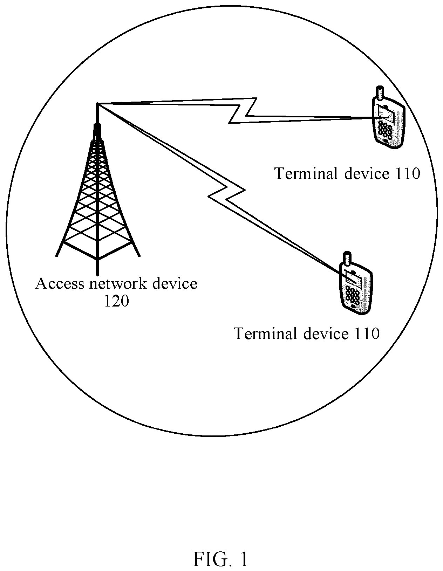

FIG. 1 is a schematic diagram of a possible network architecture to which an embodiment of this application is applicable. The network architecture includes a terminal device 110 and an access network device 120. The terminal device 110 and the access network device 120 may communicate with each other through a Uu air interface. The Uu air interface may be understood as a universal UE to network interface (universal UE to network interface). Transmission through the Uu air interface includes uplink transmission and downlink transmission.

For example, the uplink transmission means that the terminal device 110 sends an uplink signal to the access network device 120. The uplink signal may include one or more of uplink data information, uplink control information, and a reference signal (reference signal, RS). A channel used to transmit the uplink signal is referred to as an uplink channel, and the uplink channel may be a physical uplink shared channel (physical uplink shared channel, PUSCH) or a physical uplink control channel (physical uplink control channel, PUCCH). The PUSCH is used to carry uplink data, and the uplink data may also be referred to as the uplink data information. The PUCCH is used to carry uplink control information (uplink control information, UCI) fed back by the terminal device. The UCI may include channel state information (channel state information, CSI), an acknowledgement (acknowledgement, ACK)/negative acknowledgement (negative acknowledgement, NACK), or the like.

In an LTE system, an access network device is an eNB, and a core network device is an MME. In a UMTS system, an access network device is an RNC, and a core network device is an SGSN. In another wireless communication system, a corresponding access network device and a corresponding core network device are also included. In the following embodiments, both the access network device and the core network device are collectively referred to as network devices relative to the terminal device.

Based on the foregoing communication system, this application provides a communication method. The following explains and describes some nouns or terms used in this application, and the nouns or terms are also used as a part of the present invention.

### 1. Terminal device

The terminal device may be briefly referred to as a terminal, or referred to as user equipment (user equipment, UE), which is a device having a wireless transceiver function. The terminal device may be deployed on land, where the deployment includes indoor or outdoor, or handheld or vehicle-mounted deployment, may be deployed on water (for example, on a ship), or may be deployed in air (for example, on aircraft, an unmanned aerial vehicle, a balloon, or a satellite). The terminal device may be a mobile phone, a car, a tablet computer, a smart speaker, a detector, a gas station sensor, a computer having a wireless transceiver function, a virtual reality terminal device, an augmented reality terminal device, a wireless terminal device in industrial control, a wireless terminal device in self-driving, a wireless terminal device in telemedicine, a wireless terminal device in a smart grid, a wireless terminal device in transportation safety, a wireless terminal device in a smart city, a wireless terminal device in a smart home, or the like. The terminal device may be fixed or mobile. This is not limited in embodiments of this application.

In embodiments of this application, an apparatus configured to implement a function of the terminal may be a terminal device, or may be an apparatus, for example, a chip system, that can support the terminal device in implementing the function. The apparatus may be installed in the terminal device. In embodiments of this application, the chip system may include a chip, or may include a chip and another discrete component. In the technical solutions provided in embodiments of this application, the technical solutions provided in embodiments of this application are described using an example in which the apparatus configured to implement the function of the terminal device is the terminal device.

### 2. Network device

The network device may be an access network device. The access network device may also be referred to as a radio access network (radio access network, RAN) device, and is a device that provides a wireless communication function for the terminal device. The access network device includes, for example, but is not limited to, a next generation NodeB (generation NodeB, gNB), an evolved NodeB (evolved NodeB, eNB), a baseband unit (baseband unit, BBU), a transmission reception point (transmission reception point, TRP), a transmitting point (transmitting point, TP) in 5G, a base station in a future mobile communication system, or an access point in a Wi-Fi system. Alternatively, the access network device may be a radio controller, a central unit (central unit, CU), and/or a distributed unit (distributed unit, DU) in a cloud radio access network (cloud radio access network, CRAN) scenario, or the network device may be a relay station, a vehicle-mounted device, a network device in a future evolved PLMN network, or the like.

The terminal device may communicate with a plurality of access network devices by using different technologies. For example, the terminal device may communicate with an access network device supporting long term evolution (long term evolution, LTE), may communicate with an access network device supporting 5G, or may communicate with both an access network device supporting LTE and an access network device supporting 5G. This is not limited in embodiments of this application.

In embodiments of this application, an apparatus configured to implement a function of the network device may be a network device, or may be an apparatus, for example, a chip system, that can support the network device in implementing the function. The apparatus may be installed in the network device. In the technical solutions provided in embodiments of this application, the technical solutions provided in embodiments of this application are described using an example in which an apparatus configured to implement a function of the network device is the network device.

### 3. Random access

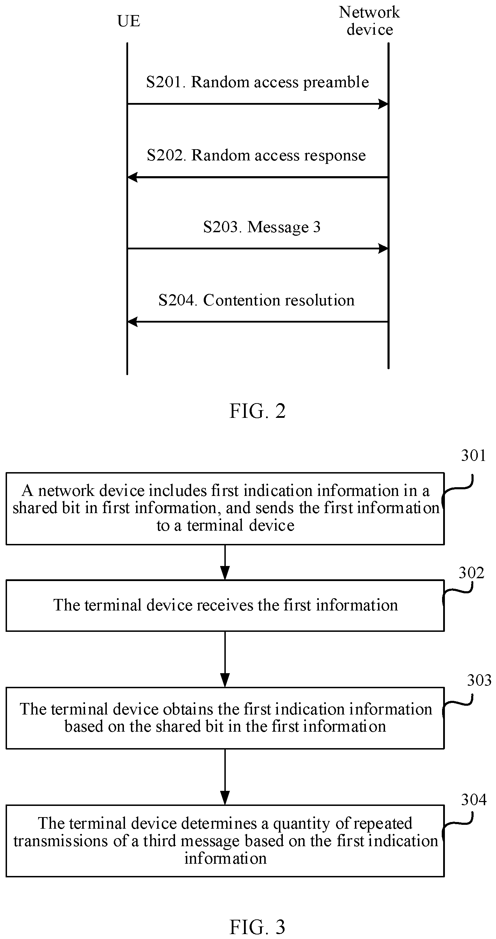

The random access is a process of establishing a radio link connection between the terminal device and the network device. Data interworking can be normally performed between the network device and the terminal device only after the random access is completed. Based on different service triggering manners, the random access may be classified into contention based random access (Contention based random access procedure) and non-contention based random access (Non-Contention based random access procedure). A main procedure of the contention based random access includes the following steps (implementation procedure steps are shown in FIG. 2).

S201. UE sends a random access preamble (random access preamble) to a network device.

The random access preamble may also be referred to as a message 1 (message 1, Msg1) or a random access request. A function of the random access preamble is to notify the network device that there is a random access request.

S202. The network device sends a random access response (random access response, RAR) to the UE after detecting the random access preamble. The random access response may also be referred to as a message 2 (message 2, Msg2). The random access response includes scheduling information, that is, RAR uplink (uplink, UL) grant (grant) information, of a message 3. The random access response may further include other information. Details are not described herein.

S203. The UE receives the random access response, and sends the message 3 on a time-frequency resource scheduled by using the scheduling information in the random access response. The message 3 is carried on a physical uplink shared channel (physical uplink shared channel, PUSCH). The message 3 may carry information such as a unique user identifier of a terminal device.

S204. The network device receives the message 3 from the UE, and returns a contention resolution message to the UE that successfully accesses the network device. The contention resolution message is also referred to as a message 4 (message 4, Msg4). The network device includes, in the contention resolution message, the unique user identifier in the message 3 to indicate the UE that successfully accesses the network device. Other UE that fails in access initiates random access again.

It can be learned from the foregoing process that successful transmission of the message 3 is important to a success of a random access procedure. However, in a communication system, coverage of the terminal device is limited in some application scenarios. A coverage-limited terminal is usually located in some deep coverage scenarios, for example, an area such as a cell edge or a basement. Alternatively, the coverage-limited terminal device usually has lower communication performance, for example, narrower bandwidth, a smaller quantity of antenna ports, a lower processing capability, longer processing time, and/or a lower transmission rate. In addition, the coverage-limited terminal device may have a longer battery lifespan, lower processing complexity, and/or device costs. As a result, when the coverage-limited terminal device performs uplink transmission, a signal to interference plus noise ratio (Signal to interference plus noise ratio, SINR) of a receive end is low, and the uplink transmission usually needs to be repeated. The receive end performs demodulation and decoding after receiving and combining a plurality of uplink transmissions.

An implementation solution of repeatedly transmitting the Msg 3 that is proposed for the coverage-limited terminal is as follows: The network device indicates, through one scheduling, the terminal device to repeatedly transmit same valid data for a plurality of consecutive times on a valid uplink time domain resource, and the network device performs demodulation and decoding after receiving and combining the plurality of consecutive uplink transmissions. In an existing NR protocol, for a user who has established an RRC connection, the communication system supports two different types of PUSCH repeated transmission: a PUSCH repeated transmission type A (PUSCH repetition Type A) and a PUSCH repeated transmission type B (PUSCH repetition Type B). The PUSCH repeated transmission type A is slot-based, and it is required that locations and lengths of time domain symbols occupied by a PUSCH in each slot used for PUSCH repeated transmission be the same. The PUSCH repeated transmission cannot be performed in a slot that does not meet the foregoing condition. For the PUSCH repeated transmission type B, PUSCH repeated transmission is not limited to slot-based transmission, but the PUSCH repeated transmission is performed on a plurality of consecutive uplink symbols starting from a start uplink symbol (a specific implementation of the repetition type B may be that a start symbol varies in each repeated transmission, or a quantity of symbols actually transmitted each time varies in each repeated transmission).

In implementation of repeated transmission in the existing NR protocol, if a quantity of bits of a RAR UL grant is increased to indicate a quantity of repeated transmissions of the Msg 3, more time-frequency resources are occupied in this implementation solution. In addition, a legacy terminal cannot identify newly defined RAR UL grant information, and consequently cannot access a network, affecting normal communication.

Based on the foregoing problem in the conventional technology, an embodiment of this application provides a communication method to improve network coverage performance. The following specifically describes specific implementation steps of an embodiment of this application with reference to a network device and a terminal device that implement the method in embodiments of this application. The steps may include the following steps (as shown in FIG. 3).

S301. The network device includes first indication information in a shared bit in first information, and sends the first information to the terminal device. The first indication information indicates a quantity of repeated transmissions of a third message Msg 3. The third message Msg 3 is a radio resource control RRC connection request in a random access procedure. The shared bit is shared by the first indication information and the first information.

In this embodiment, the first information may be information used by the terminal device in the random access procedure in the conventional technology. The first information may be understood as signaling or may be understood as a field, provided that one or more bits of the first information can be divided through specific setting and used as bits shared with the first indication information. Certainly, when the first information and the first indication information share one or more bits, an original bit set originally indicating a meaning of the first information is changed to indicate a meaning to be indicated by the first information and a meaning to be indicated by the first indication information. In other words, some bits in the original bit set indicate the meaning of the first information, and some bits indicate the meaning of the first indication information. In this manner, more information can be carried without increasing a field or signaling length, so that resources are appropriately used.

S302. The terminal device receives the first information.

S303. The terminal device obtains the first indication information based on the shared bit in the first information.

S304. The terminal device determines the quantity of repeated transmissions of the third message based on the first indication information.

After it is determined, in the manner provided in the foregoing embodiment, that the Msg 3 can be repeatedly transmitted, considering that in an existing NR protocol, a communication system supports two different types of PUSCH repeated transmission (where the types of repeated transmission include a PUSCH repeated transmission type A (PUSCH repetition Type A) and a PUSCH repeated transmission type B (PUSCH repetition Type B)), further, to repeatedly transmit the Msg 3 in a more flexible manner, in this embodiment,
the first indication information further indicates a type of repeated transmission of the Msg 3. The type of the repeated transmission includes a repetition type A and a repetition type B.

For the repetition type A and the repetition type B, refer to specific explanations in the protocol TS 38.214. In this example, a manner is only provided to indicate a specific manner in which the terminal performs repeated transmission, and whether the type is specifically the repetition type A or the repetition type B is not limited or a specific repetition type is not limited.

In this embodiment, after determining that the Msg 3 needs to be repeatedly transmitted, the terminal device may further determine, based on the type of the repeated transmission that is indicated by the first indication information, which one of the repetition type A or the repetition type B is used to repeatedly transmit the Msg 3, so that the Msg 3 can be repeatedly transmitted in a more flexible manner, to further improve stability of accessing a network by the terminal device and ensure normal communication.

Based on the method shown in FIG. 3, in a process of transmitting the first information and the first indication information, to achieve an objective that two types of information are simultaneously indicated and the two types of information do not affect each other, a quantity of bits that may be used as the shared bit and that are in the first information may be limited to some extent. To more flexibly set the quantity of repeated transmissions of the Msg 3, this embodiment of this application further provides a manner in which a repeated transmission factor K and the first indication information are combined to indicate the quantity of repeated transmissions. There may be a plurality of manners of setting the repeated transmission factor. After it is determined, by using the first indication information, that repeated transmission can be performed, and one piece of basic data for repeated transmission is set, a plurality of quantities of repeated transmissions may be flexibly set by using the repeated transmission factor K (which is also referred to as a variable factor), to improve flexibility of setting the quantity of repeated transmissions. A specific implementation may be: determining the quantity of repeated transmissions of the third message based on a first quantity of repeated transmissions that is indicated by the first indication information and the repeated transmission factor K.

In this implementation, the quantity of repeated transmissions that is indicated by the first indication information includes a case whether repeated transmission can be performed. When the quantity of repeated transmissions that is indicated by the first indication information is 0, it indicates that repeated transmission is not supported. If the indicated quantity of repeated transmissions is not 0, an appropriate quantity of repeated transmissions may be determined based on the first indication information and the repeated transmission factor K, to perform repeated transmission.

The terminal device and the network device may unify setting of the repeated transmission factor K in a setting manner. An example is as follows:
A1. The repeated transmission factor K is included in the first indication information. A specific implementation may be as follows:
   The network device includes the repeated transmission factor K in the first indication information. Alternatively, correspondingly, the terminal device obtains the repeated transmission factor K from the first indication information.
A2. The repeated transmission factor K is a predefined value.
   The terminal device pre-stores the repeated transmission factor K, and after determining, by using the first indication information, that repeated transmission can be performed, obtains the quantity of repeated transmissions based on a cardinal of repeated transmissions that is indicated by the first indication information and the repeated transmission factor K.
A3. The repeated transmission factor K is included in a received system message SIB.

Correspondingly, the network device may include the repeated transmission factor K in the system message (System Information Block, SIB). In a specific application implementation, a SIB1 may be selected to carry the repeated transmission factor K. Correspondingly, the terminal device may obtain the repeated transmission factor K from the SIB1 message.

In this example, the terminal device and the network device may be preconfigured to transmit the repeated transmission factor K by using one piece of second information. Because limited information is exchanged between the network device and the terminal device before a radio resource control (Radio Resource Control, RRC) connection is established, in this case, a SIB message may be selected as the second information in this example, that is, a SIB is selected to carry the repeated transmission factor K.

According to the foregoing method, a value indicated by the first indication information and the repeated transmission factor K may be combined to determine the quantity of repeated transmissions. This expands an optional quantity range of the quantity of repeated transmissions, and there are more repeated transmission manners. Further, based on the foregoing indication manners A1 and A3 of the repeated transmission factor K, real-time update and adjustment of the repeated transmission factor K can be implemented. When a quantity of repeated transmissions that can be indicated by the first indication information is limited and the quantity of repeated transmissions needs to be flexibly indicated, an appropriate occasion may be selected more flexibly to indicate a latest repeated transmission factor K by using the first information or the SIB.

It is pointed out in step 301 that, in this embodiment of this application, a plurality of types of signaling or fields may be used as the first information to carry the first indication information. However, based on a most common application scenario of repeated transmission, repeated transmission is generally performed for a coverage-limited terminal device. Therefore, in the method provided in this embodiment of this application, a field commonly used for transmitting information by the coverage-limited terminal device may be selected to carry the first indication information, and a field is selected based on some characteristics of the coverage-limited terminal device to provide the shared bit. First, in this embodiment of this application, an implementation of determining whether coverage of the terminal device is limited may be as follows:

The terminal device may determine, by using reference signal received power (Reference signal received power, RSRP), whether coverage of the terminal device is limited, and determine a coverage level by using an RSRP value. When the coverage level of the terminal device is a preset coverage level, it may be considered that the terminal device is a coverage-limited terminal device.

After the terminal device determines that the terminal device is a coverage-limited terminal device, the coverage-limited terminal device may increase an access probability by performing PRACH repeated transmission. Based on this applicable scenario, in this embodiment of this application, a plurality of specific manners in which the terminal device notifies the network device (which may be a base station) of a coverage level of the terminal device (or whether coverage is limited) may include the following:
Manner 1: The coverage level of the terminal device is indicated by using a physical random access channel (Physical Random Access Channel, PRACH) resource.

The base station reserves a dedicated PRACH resource (that is, may add a new type of PRACH resource) for the coverage-limited terminal device. When determining that the reference signal received power (Reference signal received power, RSRP) is less than a predefined threshold (that is, determining that the terminal device is a coverage-limited terminal), the terminal device selects to use the reserved PRACH resource. Further, terminal devices of different coverage levels may select to use different reserved PRACH resources. In other words, the coverage-limited terminal may perform access through PRACH repeated transmission. The PRACH repeated transmission includes a plurality of transmissions at different time domain or frequency domain locations. During repeated transmission, a PRACH sequence does not change.

Correspondingly, the network device may determine the coverage level of the terminal device based on the PRACH resource used by the terminal device. In other words, the network device determines the coverage level of the terminal device based on a time domain or frequency domain location of the PRACH resource used by the terminal device.

Manner 2: The coverage level of the terminal device is indicated by using a quantity of PRACH repeated transmissions by the terminal device.

The coverage-limited terminal device performs PRACH repeated transmission to increase an access probability. Correspondingly, the base station may identify, by detecting a quantity of PRACH repeated transmissions, whether the coverage-limited terminal device accesses the base station. Further, the quantity of PRACH repeated transmissions may correspond to a limitation level of the terminal device. In this case, the network device may determine the coverage level of the terminal device based on the quantity of PRACH repeated transmissions by the terminal device.

Manner 3: The coverage level of the terminal device is determined based on received power of a signal carried by the terminal device on a PRACH channel.

Further, an SINR of the coverage-limited terminal is low. Therefore, the coverage-limited terminal device usually selects a small MCS index value. Therefore, for an existing MCS field, there may be a redundant bit. In addition, for the coverage-limited terminal device, usually full-power transmission cannot meet an access requirement. Therefore, a power adjustment rate indicated by a transmit power control (Transmit power control, TPC) field should be a positive value, and the shared bit may be provided by the TPC field. Therefore, the first information may be an MCS field and/or a TPC field. The method provided in this embodiment is further described below for manners of providing the shared bit by the two different fields.
1. When the first information is the MCS field, an implementation of indicating the quantity of repeated transmissions in this embodiment of this application may be as follows:
In the method provided in this embodiment of this application, the MCS field can carry the first indication information without affecting an existing meaning of the MCS field. To further describe the shared bit provided by the MCS field, an existing format of the MCS field and a meaning to be indicated by the field are first described. Details are as follows:
In uplink grant RAR UL grant information of an existing random access response, a total of 16 MCS index values are included, and are indicated by four bits. As the index value increases from 0 to 15, a code rate, spectral efficiency, and the like corresponding to the index value also increase sequentially (where a mapping relationship between an MCS index value and a bit value is shown in Table 1).

**Table 1**

| Bit value | MCS index | Bit value | MCS index |
|---|---|---|---|
| 0000 | 0 | 1000 | 8 |
| 0001 | 1 | 1001 | 9 |
| 0010 | 2 | 1010 | 10 |
| 0011 | 3 | 1011 | 11 |
| 0100 | 4 | 1100 | 12 |
| 0101 | 5 | 1101 | 13 |
| 0110 | 6 | 1110 | 14 |
| 0111 | 7 | 1111 | 15 |

In an existing communication system, terminal devices may be classified into a plurality of coverage levels based on coverage statuses of the terminal devices, and the coverage level is determined based on RSRP of the terminal device. If it is determined, based on the RSRP, that the coverage level of the terminal device is a preset coverage level, it may be determined that the terminal device is a coverage-limited terminal device. Because an SINR of the coverage-limited terminal device is low, the coverage-limited terminal device usually selects a small MCS index value, to correspond to a low bit rate, spectral efficiency, and the like. For example, the coverage-limited terminal device usually selects only MCS index values 0 to 3 or 0 to 7. If the MCS index values are 0 to 3, as shown in Table 1, status values of a 4-bit field that indicates the MCS index values are 0000 to 0011. In this case, it may also be understood as that the coverage-limited terminal device uses only two lower-order bits of the 4-bit field that indicates the MCS index values, and two higher-order bits are redundant bits. For another example, the coverage-limited terminal device usually selects only MCS index values 0 to 7. In this case, status values of a 4-bit field that indicates the MCS index values are 0000 to 0111. In this case, it may also be understood as that the coverage-limited terminal device uses only three lower-order bits of the 4-bit field that indicates the MCS index values, and a highest-order bit is a redundant bit.

Based on the foregoing descriptions of the MCS field used by the coverage-limited terminal, it may be understood that for the coverage-limited terminal, the 4-bit MCS field may have one or two redundant bits when indicating the MCS index value. In the method provided in this embodiment of this application, the one or two redundant bits may be used as the shared bit to transmit the first indication information. That is, if the first information is the MCS field, and the coverage level of the terminal device is the preset coverage level, the shared bit is one or two bits in most significant bits (MSBs) of the MCS field. The following separately describes in detail the shared bit in the foregoing two cases.

Case 1: The coverage-limited terminal device selects MCS index values 0 to 7. In this case, status values of the four bits that indicate the MCS field are 0000 to 0111. In this case, the MCS field has one redundant bit, and the one redundant bit may be used as the shared bit to indicate the first indication information.

For the coverage-limited terminal that selects MCS index values 0 to 7, a most significant bit (Most significant bit, MSB) of the terminal is not used to indicate the MCS index value, and therefore may be used to indicate the quantity of repeated transmissions of the Msg 3. For example, when the MSB of the MCS field is used as the shared bit, when the terminal device receives "1110", if the terminal device is a coverage-limited terminal, an MCS index value indicated by "1110" is 6. In other words, significant bits of the MCS index value are three bits "110" on the right, and the most significant bit MSB is not included.

Further, the first indication information may be determined based on a predefined relationship between a value carried in the MSB and a quantity of repeated transmissions. For example, when the MSB is 0, it indicates that the quantity of repeated transmissions is 0 (that is, repeated transmission of the Msg 3 is not supported); or when the MSB is 1, the quantity of repeated transmissions is 2. Certainly, for the coverage-limited terminal, the Msg 3 may alternatively need to be repeatedly transmitted by default. In this case, when the MSB is 0, it may alternatively be indicated that the quantity of repeated transmissions is 2 or another specified value. In this embodiment, the quantity of repeated transmissions is a sum of all quantities of transmissions, that is, a total quantity of times of first transmission and subsequent repeated transmission.

In addition, to more flexibly indicate the quantity of repeated transmissions, the quantity of repeated transmissions may be further determined based on a predefined repeated transmission factor K and a value indicated by the shared bit, and a finally determined quantity of repeated transmissions = the value indicated by the shared bit * K. In this embodiment of this application, the value indicated by the shared bit is not limited to a value obtained by performing binary conversion on the shared bit. Alternatively, a value obtained by performing binary conversion may be mapped to a new value based on a preset mapping relationship. For example, as shown in Table 2, when the value obtained by performing binary conversion on the shared bit is 0, 0 is mapped to another value (for example, 1) based on the mapping relationship. In this example, a specific mapping relationship may be set based on a specific transmission requirement and is not specifically limited herein. In this scenario, if K is set to 2, and a preset value of the MSB is 1, a quantity of repeated transmissions that indicates to perform repeated transmission for two times is shown in the following Table 2.

**Table 2**

| Highest-order bit of the MCS field | Value indicated by the shared bit | Remarks |
|---|---|---|
| 0 | 1 | If K = 2, the quantity of repeated transmissions is: 2 * 1 = 2. |
| 1 | 2 | If K = 2, the quantity of repeated transmissions is: 2 * 2 = 4. |

Certainly, for a coverage-unlimited terminal device, when the MCS field is "1110", an indicated MCS index value is 14.

Case 2: The coverage-limited terminal device selects MCS index values 0 to 3. In this case, status values of the 4-bit field that indicates the MCS field are 0000 to 0011. In this case, the MCS field may have two redundant bits, and the two redundant bits may be used as the shared bits to indicate the first indication information. Similar to the indication manner in the foregoing case 1, when the status values of the MCS field are 0111, corresponding significant bits of the MCS index value is the rightmost two bits (that is, 11), and the corresponding MCS index value is 3. Correspondingly, a case in which the first indication information may indicate a quantity of repeated transmissions may be shown in Table 3.

**Table 3**

| Two highest-order bits of the MCS field | Value indicated by the shared bit | Remarks |
|---|---|---|
| 00 | 1 | Indicates that transmission is not repeatedly performed and only performed once. |
| 01 | 2 | Total quantity of transmissions: 2 |
| 10 | 4 | Total quantity of transmissions: 4 |
| 11 | 8 | Total quantity of transmissions: 8 |

In addition, to more flexibly indicate the quantity of repeated transmissions, the quantity of repeated transmissions may be further indicated based on a predefined repeated transmission factor, as shown in Table 4 below.

**Table 4**

| Two highest-order bits of the MCS field | Value indicated by the shared bit | Remarks |
|---|---|---|
| 00 | 1 * K | If K = 2, 1 * K indicates that transmission is performed twice. |
| 01 | 2 * K | If K = 2, 2 * K indicates that transmission is performed for four times. |
| 10 | 4 * K | If K = 2, 4 * K indicates that transmission is performed for eight times. |
| 11 | 8 * K | If K = 2, 8 * K indicates that transmission is performed for 16 times. |

### 2. When the first information is the TPC field, an implementation of indicating the quantity of repeated transmissions in this embodiment of this application may be as follows:

In the method provided in this embodiment of this application, the TPC field can carry the first indication information without affecting an existing meaning of the TPC field. To further describe the shared bit provided by the TPC field, an existing format of the TPC field and a meaning to be indicated by the field are first described. Specifically:
The TPC field is used to control transmit power of the third message in the random access procedure. When transmit power of the terminal device is low and cannot meet a demodulation requirement, the network device may indicate, by using the TPC field, the terminal device to increase the transmit power. When the transmit power of the terminal device is high, the network device may indicate, by using the field, the terminal device to decrease the transmit power. In an uplink grant of the random access response, the TPC field is indicated by using three bits, and different status values of the TPC field correspond to different power adjustment amounts. Table 5 shows status values of a TPC field and a power adjustment amount corresponding to each status value in an existing protocol.

**Table 5**

| TPC command | Value (in dB) |
|---|---|
| 0 | -6 |
| 1 | -4 |
| 2 | -2 |
| 3 | 0 |
| 4 | 2 |
| 5 | 4 |
| 6 | 6 |
| 7 | 8 |

For the coverage-limited terminal device, usually full-power transmission cannot meet the access requirement, and a power adjustment rate indicated by the TPC field should be a positive value. Based on this case, it is indicated that index values of the TPC field of the coverage-limited terminal are 4 to 7, in other words, the TPC index values that are needed by the coverage-limited terminal and that can be selected have only four cases. Therefore, selecting two bits may meet an objective of indicating the TPC index value of the coverage-limited terminal. In this case, one bit of the TPC field may be used as the shared bit that carries the first indication information, and the shared bit may be an MSB or a least significant bit (least significant bit, LSB) of the TPC field. In other words, if the first information is the TPC field, and the coverage level of the terminal device is the preset coverage level, the shared bit is the least significant bit LSB or the most significant bit MSB of the TPC field.

As shown in Table 5, if the index values of the TPC field selected by the coverage-limited terminal are 4 to 7 (corresponding power adjustment values are 2, 4, 6, and 8), the corresponding status values of the TPC field are 100 to 111, the highest-order bit is constantly 1, and different status values of two lower-order bits correspond to different power adjustment values. In this case, it may also be understood as that the coverage-limited terminal device only needs to identify status values of the two lower-order bits in the 3-bit field in the TPC field, and the highest-order bit is a redundant bit. In this case, the redundant bit may be used as the shared bit to carry the first indication information.

In addition, if the least significant bit LSB of the TPC field is selected as the shared bit, all status values 000 to 001 of the TPC field indicate the power adjustment value 2, and then the LSB indicates the quantity of repeated transmissions. A correspondence between a power adjustment value of a coverage-limited terminal and a power adjustment value of legacy UE and a status value of a TPC field is shown in Table 6.

**Table 6**

| TPC bit field | Legacy UE value | Coverage-limited UE value |
|---|---|---|
| 000 | -6 | 2 |
| 001 | -4 | 4 |
| 010 | -2 | 6 |
| 011 | 0 | 8 |
| 100 | 2 | 2 |
| 101 | 4 | 4 |
| 110 | 6 | 6 |
| 111 | 8 | 8 |

Based on the foregoing case, the TPC field may provide one bit as the shared bit to carry the first indication information. Based on a manner in which one bit of the MCS field carries the first indication information, in this embodiment, a desired quantity of repeated transmissions may be flexibly set in a manner in which a quantity of repeated transmissions is preset and the repeated transmission factor is set. A specific implementation is similar to that of the MCS field. Details are not described herein again.

In an actual application scenario, both the MCS field and the TPC field may be used. Therefore, in the method provided in this embodiment of this application, shared bits that can be provided by the MCS field and the TPC field may be further used in combination, to further increase a value of a quantity of repeated transmissions that can be indicated, and indicate a repeated transmission type, a repeated transmission factor, and the like. Specific implementation may be as follows:

Joint indication manner 1: If the most significant bit of the MCS field and the least significant bit of the TPC field are used to jointly indicate the quantity of repeated transmissions, during joint indication, the most significant bit of the MCS field and the least significant bit of the TPC field may be selected; or the most significant bit of the MCS field and a most significant bit of the TPC field may be used to jointly indicate the quantity of repeated transmissions. If the repeated transmission factor K is not configured, K is 1 by default. Corresponding indicated quantities of repeated transmissions are shown in the following Table 7. When the shared bit in the MCS field is combined with the shared bit in the TPC field, an order of the two bits is not limited to an order in the following table.

**Table 7**

| Most significant bit of the MCS field | Least significant bit of the TPC field | Quantity of repeated transmissions | Remarks |
|---|---|---|---|
| 0 | 0 | 1 * K | If K = 2, transmission is performed twice. |
| 0 | 1 | 2 * K | If K = 2, transmission is performed for four times. |
| 1 | 0 | 4 * K | If K = 2, transmission is performed for eight times. |
| 1 | 1 | 8 * K | If K = 2, transmission is performed for 16 times. |

Joint indication manner 2: If first two bits of the most significant bits of the MCS field and the least significant bit of the TPC field are used to jointly indicate the quantity of repeated transmissions, during joint indication, the first two bits of the most significant bits of the MCS field and the most significant bit of the TPC field may be used to jointly indicate the quantity of repeated transmissions. As shown in the following Table 8, if the repeated transmission factor K is not configured, K is 1 by default. In this embodiment, K may be set to 2. An order of the most significant bit of the MCS field and the least significant bit of the TPC field is not limited to an order in the following table.

**Table 8**

| Most significant bit of the MCS field | Least significant bit of the TPC field | Quantity of repeated transmissions | Remarks |
|---|---|---|---|
| 00 | 0 | 1 * K | If K = 2, transmission is performed twice. |
| 00 | 1 | 2 * K | If K = 2, transmission is performed for four times. |
| 01 | 0 | 4 * K | If K = 2, transmission is performed for eight times. |
| 01 | 1 | 6 * K | If K = 2, transmission is performed for 12 times. |
| 10 | 0 | 8 * K | If K = 2, transmission is performed for 16 times. |
| 10 | 1 | 10 * K | If K = 2, transmission is performed for 20 times. |
| 11 | 0 | 12 * K | If K = 2, transmission is performed for 24 times. |
| 11 | 1 | 14 * K | If K = 2, transmission is performed for 28 times. |

Joint indication manner 3: If first two bits of the most significant bits of the MCS field indicate the quantity of repeated transmissions, the least significant bit or the most significant bit of the TPC field may indicate a repetition type, that is, whether the repetition type is specifically the repetition type A or the repetition type B during repeated transmission.

Certainly, in the foregoing three joint indication manners, when there are at least two shared bits, one bit may be spared to indicate the repetition type of repeated transmission.

In this embodiment of this application, after receiving the first information (the first information is information sent by the network device and the terminal device in the random access procedure in the conventional technology), the terminal device obtains the first indication information based on the shared bit in the first information. The first indication information may indicate the quantity of repeated transmissions of the Msg 3. The shared bit is shared by the first information and the first indication information. To be specific, when the first indication information is not carried, the shared bit may indicate information that needs to be carried by the first information. Therefore, according to the method provided in this embodiment of this application, the terminal device can obtain, without increasing time-frequency resource overheads, the quantity of repeated transmissions of the Msg 3, to implement repeated transmission of the Msg 3 and avoid a problem of limited coverage of the terminal device.

It may be understood that, to implement a function in the foregoing embodiments, the network device and the terminal device include corresponding hardware structures and/or software modules for performing the function. A person skilled in the art should easily be aware that, in combination with the units and the method steps in the examples described in embodiments disclosed in this application, this application can be implemented by hardware, software, or a combination of hardware and software. Whether a function is performed by hardware, software, or hardware driven by computer software depends on particular application scenarios and design constraints of the technical solutions.

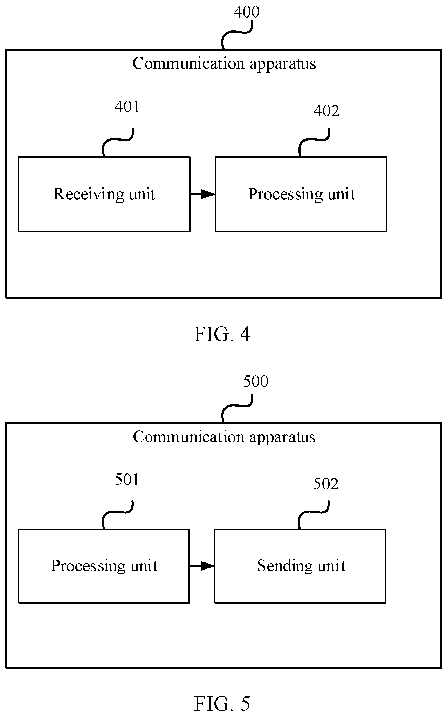

FIG. 4 is a schematic diagram of a structure of a possible communication apparatus according to an embodiment of this application. The communication apparatus 400 may implement a function of the terminal device in the foregoing method embodiment. Therefore, beneficial effects of the foregoing method embodiment can also be implemented. In this embodiment of this application, the communication apparatus may be the terminal device 110 shown in FIG. 1, or may be a module (such as a chip) used in the terminal device.

As shown in FIG. 4, the communication apparatus 400 includes a receiving unit 401 and a processing unit 402, which may be configured to implement a function of the terminal device in the method embodiment shown in FIG. 3. Specifically:
The receiving unit 401 is configured to receive first information.

Optionally, the first information includes a modulation and coding scheme MCS field and/or a transmit power control TPC field.

If the first information is the MCS field, and a coverage level of the terminal device is a preset coverage level, a shared bit is one or two bits in most significant bits MSBs of the MCS field.

If the first information is the TPC field, and a coverage level of the terminal device is a preset coverage level, a shared bit is a least significant bit LSB or a most significant bit MSB of the TPC field.

Optionally, first indication information further indicates a type of repeated transmission of a Msg 3. The type of the repeated transmission includes a repetition type A and a repetition type B.

The processing unit 402 is configured to: obtain the first indication information based on the shared bit in the first information, where the first indication information indicates a quantity of repeated transmissions of the third message Msg 3, the third message Msg 3 is a radio resource control RRC connection request in a random access procedure, and the shared bit is shared by the first indication information and the first information; and determine the quantity of repeated transmissions of the third message based on the first indication information.

Optionally, the processing unit 402 is specifically configured to determine the quantity of repeated transmissions of the third message based on a first quantity of repeated transmissions that is indicated by the first indication information and a repeated transmission factor K.

The repeated transmission factor K is included in the first indication information.

Alternatively, the repeated transmission factor K is a predefined value.

Alternatively, the repeated transmission factor K is included in a received system message SIB.

Optionally, the communication apparatus may further include:
The processing unit 402 is further configured to determine the coverage level based on reference signal received power RSRP.

FIG. 5 is a schematic diagram of a structure of a possible communication apparatus according to an embodiment of this application. The communication apparatus 500 may implement a function of the network device in the foregoing method embodiment. Therefore, beneficial effects of the foregoing method embodiment can also be implemented. In this embodiment of this application, the communication apparatus may be the access network device 120 shown in FIG. 1, or may be a module (such as a chip) used in the access network device.

As shown in FIG. 5, the communication apparatus 500 includes a processing unit 501 and a sending unit 502. The communication apparatus 500 may be configured to implement a function of the network device in the method embodiment shown in FIG. 3.

Specifically, the processing unit 501 is configured to include first indication information in a shared bit in first information. The first indication information indicates a quantity of repeated transmissions of a third message Msg 3. The third message Msg 3 is a radio resource control RRC connection request in a random access procedure. The shared bit is shared by the first indication information and the first information.

In an implementation, the first indication information further indicates a type of repeated transmission of the Msg 3. The type of the repeated transmission includes a repetition type A and a repetition type B.

The sending unit 502 is configured to send the first information to a terminal device.

In an implementation, the processing unit 501 is further configured to: include a repeated transmission factor K in the first indication information, where the quantity of repeated transmissions of the third message is determined by using the first indication information and the repeated transmission factor K; or include a repeated transmission factor K in a system message SIB.

In an implementation, the first information includes a modulation and coding scheme MCS field and/or a transmit power control TPC field.

In an implementation, if the first information is the MCS field, and a coverage level of the terminal device is a preset coverage level, the shared bit is one or two bits in most significant bits MSBs of the MCS field.

In an implementation, if the first information is the TPC field, and a coverage level of the terminal device is a preset coverage level, the shared bit is a least significant bit LSB or a most significant bit MSB of the TPC field.

In an implementation, the communication apparatus may further include:

The processing unit is further configured to determine the coverage level of the terminal device based on a reserved physical random access channel PRACH resource used by the terminal device;
determine the coverage level of the terminal device based on a quantity of PRACH repeated transmissions by the terminal device; or
determine the coverage level of the terminal device based on received power of a signal carried by the terminal device on a PRACH channel.

For more detailed descriptions of the receiving unit 401, the processing unit 402, the processing unit 501, and the sending unit 502, refer to related descriptions in the foregoing method embodiments. Details are not described herein again. Hardware elements of the receiving unit 401 and the sending unit 502 may be transceivers, and hardware elements of the processing unit 402 and the processing unit 501 may be processors.

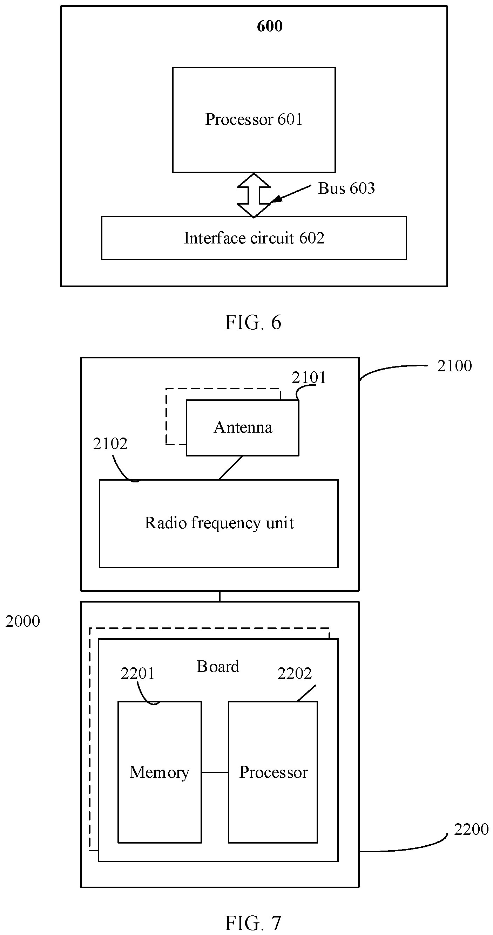

FIG. 6 shows an embodiment of this application. A communication apparatus 600 includes a processor 601 and an interface circuit 602. The processor 601 and the interface circuit 602 may be connected through a bus 603. It may be understood that the interface circuit 602 may be a transceiver or an input/output interface. Optionally, the communication apparatus 600 may further include a memory, configured to store instructions to be executed by the processor 601, store input data required for running the instructions by the processor 601, or store data generated after the processor 601 runs the instructions.

When the communication apparatus 600 is configured to implement the method in the foregoing method embodiment, the processor 601 is configured to perform a function of the processing unit 402 or the processing unit 501, and the interface circuit 602 is configured to perform functions of the receiving unit 401 and the sending unit 502.

When the communication apparatus 600 is a chip used in a terminal device, the chip in the terminal device implements a function of the terminal device in the foregoing method embodiment. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus 600 is a chip used in a network device, the chip in the network device implements a function of the network device in the foregoing method embodiment. The chip in the network device receives information from another module (for example, a radio frequency module or an antenna) in the network device, where the information is sent by a terminal device to the network device. Alternatively, the chip in the network device sends information to another module (for example, a radio frequency module or an antenna) in the network device, where the information is sent by the network device to a terminal device.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). An operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, a computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a radio channel, and various other media that can store, contain, and/or carry instructions and/or data.

FIG. 7 is a schematic diagram of a structure of a network device according to an embodiment of this application, for example, a schematic diagram of a structure of a base station. The base station 2000 may be used in the system shown in FIG. 1, to perform a function of the network device in the foregoing method embodiment. As shown in the figure, the base station 2000 may include at least one antenna 2101 and at least one radio frequency unit 2102. Optionally, a transceiver unit 2100 may include a receiving unit and a sending unit. The receiving unit may correspond to a receiver (or referred to as a receiver machine or a receiver circuit), and the sending unit may correspond to a transmitter (or referred to as a transmitter machine or a transmitter circuit).

It should be understood that the base station 2000 shown in FIG. 7 can implement each process related to the network device in the foregoing method embodiments. Operations or functions of the modules in the base station 2000 are respectively intended to implement corresponding procedures in the foregoing method embodiment. For details, refer to the descriptions in the foregoing method embodiment. To avoid repetition, detailed descriptions are appropriately omitted herein.

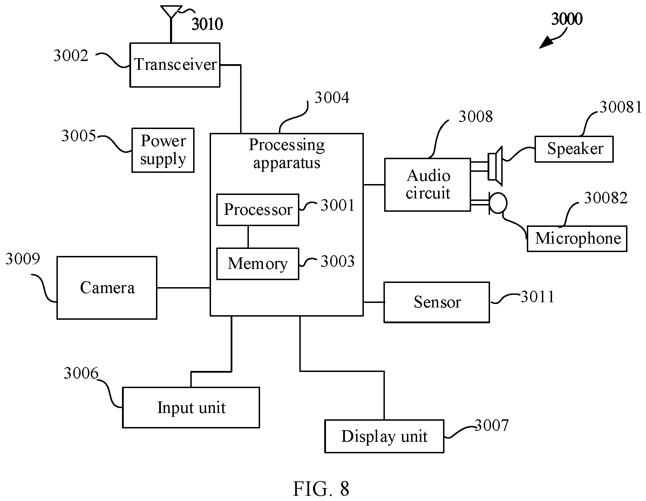

FIG. 8 is a schematic diagram of a structure of a terminal device 3000 according to an embodiment of this application. As shown in the figure, the terminal device 3000 includes a processor 3001 and a transceiver 3002. Optionally, the terminal device 3000 may further include a memory 3003. The processor 3001, the transceiver 3002, and the memory 3003 may communicate with each other through an internal connection path, and transfer a control signal and/or a data signal. The memory 3003 is configured to store a computer program. The processor 3001 is configured to: invoke the computer program from the memory 3003 and run the computer program, to control the transceiver 3002 to receive and send a signal.

The processor 3001 and the memory 3003 may be integrated into one processing apparatus 3004. The processor 3001 is configured to execute program code stored in the memory 3003 to implement the foregoing functions. It should be understood that the processing apparatus 3004 shown in the figure is merely an example. During specific implementation, the memory 3003 may alternatively be integrated into the processor 3001, or may be independent of the processor 3001. This is not limited in this application.

The terminal device 3000 may further include an antenna 3010, configured to send, by using a radio signal, uplink data or uplink control signaling output by the transceiver 3002.

It should be understood that, the terminal device 3000 shown in FIG. 8 can implement each process related to the terminal device in the foregoing method embodiments. Operations or functions of modules in the terminal device 3000 are respectively intended to implement corresponding procedures in the foregoing method embodiments. For details, refer to the descriptions in the foregoing method embodiment. To avoid repetition, detailed descriptions are appropriately omitted herein.

Optionally, the terminal device 3000 may further include a power supply 3005, configured to supply power to various components or circuits in the terminal device.

In addition, to improve functions of the terminal device, the terminal device 3000 may further include one or more of an input unit 3006, a display unit 3007, an audio circuit 3008, a camera 3009, a sensor 3011, and the like. The audio circuit may further include a speaker 30081, a microphone 30082, and the like.

It should be understood that the processing apparatus may be a chip. For example, the processing apparatus may be a field programmable gate array (field programmable gate array, FPGA), may be a general-purpose processor, a digital signal processor (digital signal processor, DSP), an application-specific integrated circuit (application-specific integrated circuit, ASIC), the field programmable gate array (field programmable gate array, FPGA) or another programmable logic device, a discrete gate or a transistor logic device, or a discrete hardware component, may be a system on chip (system on chip, SoC), may be a central processing unit (central processing unit, CPU), may be a network processor (network processor, NP), may be a digital signal processor (digital signal processor, DSP), may be a micro controller unit (micro controller unit, MCU), or may be a programmable controller (programmable logic device, PLD) or another integrated chip. The processing apparatus may implement or perform the methods, steps, and logical block diagrams that are disclosed in embodiments of this application. The general-purpose processor may be a microprocessor, or the processor may be any conventional processor, or the like. Steps of the method disclosed with reference to embodiments of this application may be directly executed and accomplished by using a hardware decoding processor, or may be executed and accomplished by using a combination of hardware and software modules in a decoding processor. The software module may be located in a mature storage medium in the art, such as a random access memory, a flash memory, a read-only memory, a programmable read-only memory, an electrically erasable programmable memory, a register, or the like. The storage medium is located in the memory, and the processor reads information in the memory and completes the steps in the foregoing method in combination with hardware of the processor.

The memory 3003 may be a volatile memory or a nonvolatile memory, or may include the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that the memory in the system and the method described in this specification is intended to include, but not limited to, these memories and any memory of another appropriate type.

This application further provides a computer program product. The computer program product includes computer program code. When the computer program code runs on a computer, the computer is enabled to perform the method performed by the terminal device or the network device in any one of the foregoing method embodiments.

This application further provides a computer-readable medium. The computer-readable medium stores program code. When the program code is run on a computer, the computer is enabled to perform the method performed by the network device or the terminal device in the foregoing method embodiment.

This application further provides a system, including at least one terminal device and at least one network device.

All or some of the foregoing embodiments may be implemented by software, hardware, firmware, or any combination thereof. When software is used to implement embodiments, all or some of embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state disc (solid state disc, SSD)), or the like.

Terms such as "component", "module", and "system" used in this specification are used to indicate computer-related entities, hardware, firmware, combinations of hardware and software, software, or software being executed. For example, a component may be but is not limited to a process that runs on a processor, a processor, an object, an executable file, an execution thread, a program, or a computer. As shown in figures, both an application that runs on a computing device and a computing device may be components. One or more components may reside within a process or an execution thread, and a component may be located on one computer or distributed between two or more computers. In addition, these components may be executed from various computer-readable media that store various data structures. For example, the components may communicate by using a local or remote process based on a signal having one or more data packets (for example, data from two components interacting with another component in a local system, in a distributed system, or across a network such as the Internet interacting with another system by using the signal).

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be understood that, in embodiments of this application, numbers "first", "second", and the like are merely for distinguishing between different objects, for example, to distinguish between different network devices, and do not constitute a limitation on the scope of embodiments of this application. Embodiments of this application are not limited thereto.

It should be further understood that, in this application, both "when" and "if" mean that a network element performs corresponding processing in an objective situation, but do not constitute a limitation on time, do not require that the network element has a determining action during implementation, and do not mean other limitations either.

It should be further understood that, in this application, "at least one" means one or more, and "a plurality of" means two or more.

It should be further understood that, in embodiments of this application, "B corresponding to A" indicates that B is associated with A, and B may be determined based on A. However, it should be further understood that determining B based on A does not mean that B is determined based only on A. B may alternatively be determined based on A and/or other information.

It should be further understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

Unless otherwise specified, an expression used in this application similar to an expression that "an item includes one or more of the following: A, B, and C" usually means that the item may be any one of the following: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

It may be understood that, in embodiments of this application, the terminal device and/or the network device may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be necessarily to be performed.

A person of ordinary skill in the art may be aware that, with reference to the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in another manner. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual coupling or direct coupling or communication connection may be implemented through some interfaces. The indirect coupling or communication connection between the apparatuses or units may be implemented in an electrical, mechanical, or another form.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes: any medium that can store program code, such as a USB flash drive, a removable hard disk, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving, by a terminal device (110), uplink grant of a random access response from a network device (120), wherein the uplink grant of the random access response includes a modulation and coding scheme MCS field;
obtaining, by the terminal device, first indication information based on two highest bits of the MCS field, wherein the first indication information indicates a quantity of repeated transmissions of a third message Msg 3, the third message Msg 3 is a radio resource control RRC connection request in a random access procedure; and
determining, by the terminal device, the quantity of repeated transmissions of the third message based on the first indication information.

2. The method according to claim 1, wherein the first indication information further indicates a type of repeated transmission of the Msg 3.

3. The method according to claim 1 or 2, wherein the determining the quantity of repeated transmissions of the third message based on the first indication information comprises:
determining the quantity of repeated transmissions of the third message based on state value of the two highest bits of the MCS field.

4. The method according to claim 3, wherein determining the quantity of repeated transmissions of the third message based on state value of the two highest bits of the MCS field comprises:
determining the quantity of repeated transmissions of the third message based on state value of the two highest bits of the MCS field and a repeated transmission factor K.

5. The method according to any one of claims 1 to 4, wherein the MCS field has four bits, two lowest bits of the MCS field are for MCS index, the MCS index values are 0 to 3.

6. The method according to any one of claims 1 to 5, wherein the terminal device is coverage-limited terminal device.

7. A communication method, comprising:
setting, by a network device (120), first indication information in two highest bits of a modulation and coding scheme MCS field in uplink grant of a random access response, wherein the first indication information indicates a quantity of repeated transmissions of a third message Msg 3, the third message Msg 3 is a radio resource control RRC connection request in a random access procedure; and
sending, by the network device, the first indication information to a terminal device (110).

8. The method according to claim 7, wherein the first indication information further indicates a type of repeated transmission of the Msg 3.

9. The method according to claim 7 or 8, wherein different state values of the two highest bits of the MCS field correspond to different quantities of repeated transmissions of the third message.

10. The method according to claim 7 or 8, wherein product of different state values of the highest two bits in the MCS field and a repeated transmission factor K correspond to different quantities of repeated transmissions of the third message.

11. The method according to any one of claims 7 to 10, wherein the MCS field has four bits, two lowest bits of the MCS field are for MCS index, the MCS index values are 0 to 3.

12. The method according to any one of claims 7 to 11, wherein the terminal device is coverage-limited terminal device.

13. A communication apparatus, comprising:
a receiving unit (401), configured to receive uplink grant of a random access response from a network device, wherein the uplink grant of the random access response includes a modulation and coding scheme MCS field; and
a processing unit (402), configured to: obtain first indication information based on two highest bits of the MCS field, wherein the first indication information indicates a quantity of repeated transmissions of a third message Msg 3, the third message Msg 3 is a radio resource control RRC connection request in a random access procedure; and determine the quantity of repeated transmissions of the third message based on the first indication information.

14. The communication apparatus according to claim 13, wherein the first indication information further indicates a type of repeated transmission of the Msg 3.

15. The communication apparatus according to claim 13 or 14, wherein the processing unit (402) is configured to determine the quantity of repeated transmissions of the third message based on state value of the two highest bits of the MCS field.

16. The communication apparatus according to claim 15, wherein the processing unit (402) is configured to determine the quantity of repeated transmissions of the third message based on state value of the two highest bits of the MCS field and a repeated transmission factor K.

17. The communication apparatus according to any one of claims 13 to 16, wherein the MCS field has four bits, two lowest bits of the MCS field are for MCS index, the MCS index values are 0 to 3.

18. A communication apparatus, comprising:
a processing unit (501), configured to set first indication information in two highest bits of a modulation and coding scheme MCS field in uplink grant of a random access response, wherein the first indication information indicates a quantity of repeated transmissions of a third message Msg 3, the third message Msg 3 is a radio resource control RRC connection request in a random access procedure; and
a sending unit (502), configured to send the first indication information to a terminal device.

19. The communication apparatus according to claim 18, wherein the first indication information further indicates a type of repeated transmission of the Msg 3.

20. The communication apparatus according to claim 18 or 19, wherein different state values of the two highest bits of the MCS field correspond to different quantities of repeated transmissions of the third message.

21. The communication apparatus according to claim 18 or 19, wherein product of different state values of the highest two bits in the MCS field and a repeated transmission factor K correspond to different quantities of repeated transmissions of the third message.

22. The communication apparatus according to any one of claims 18 to 21, wherein the MCS field has four bits, two lowest bits of the MCS field are for MCS index, the MCS index values are 0 to 3.

23. A computer program product comprising instructions which, when executed by a processor of a terminal device, causes the terminal device to carry out the method of any of claims 1 to 6 and, when executed by a processor of a network device, causes the network device to carry out the method of any of claims 7 to 12.

24. A chip, wherein the chip is connected to a memory or the chip comprises the memory, and is configured to read and execute instructions stored in the memory, to implement the method according to any one of claims 1 to 6, when the chip is a chip of a terminal device and to implement the method according to any one of claims 7 to 12, when the chip is a chip of a network device.

## Patentansprüche

1. Kommunikationsverfahren, wobei das Verfahren Folgendes umfasst:
Empfangen, durch ein Endgerät (110), einer Uplinkerteilung einer Direktzugriffsantwort von einem Netzgerät (120), wobei die Uplinkerteilung der Direktzugriffsantwort ein Modulations- und Codierungsschema-Feld, MCS-Feld, beinhaltet;
Erlangen, durch das Endgerät, erster Anzeigeinformationen basierend auf zwei höchsten Bits des MCS-Felds, wobei die ersten Anzeigeinformationen eine Anzahl wiederholter Übertragungen einer dritten Nachricht Msg 3 anzeigen, wobei die dritte Nachricht Msg 3 eine Funkressourcensteuerungsverbindungsanforderung, RRC-Verbindungsanforderung, in einem Direktzugriffsverfahren ist; und
Bestimmen, durch das Endgerät, der Anzahl wiederholter Übertragungen der dritten Nachricht basierend auf den ersten Anzeigeinformationen.

2. Verfahren nach Anspruch 1, wobei die ersten Anzeigeinformationen ferner eine Art wiederholter Übertragung der Msg 3 anzeigen.

3. Verfahren nach Anspruch 1 oder 2, wobei das Bestimmen der Anzahl wiederholter Übertragungen der dritten Nachricht basierend auf den ersten Anzeigeinformationen Folgendes umfasst: Bestimmen der Anzahl wiederholter Übertragungen der dritten Nachricht basierend auf einem Zustandswert der zwei höchsten Bits des MCS-Felds.

4. Verfahren nach Anspruch 3, wobei das Bestimmen der Anzahl wiederholter Übertragungen der dritten Nachricht basierend auf dem Zustandswert der zwei höchsten Bits des MCS-Felds Folgendes umfasst:
Bestimmen der Anzahl wiederholter Übertragungen der dritten Nachricht basierend auf dem Zustandswert der zwei höchsten Bits des MCS-Felds und einem wiederholten Übertragungsfaktor K.

5. Verfahren nach einem der Ansprüche 1 bis 4, wobei das MCS-Feld vier Bits aufweist, die zwei niedrigsten Bits des MCS-Felds für einen MCS-Index bestimmt sind und die MCS-Indexwerte 0 bis 3 sind.

6. Verfahren nach einem der Ansprüche 1 bis 5, wobei das Endgerät ein Endgerät mit begrenzter Reichweite ist.

7. Kommunikationsverfahren, umfassend:
Festlegen, durch ein Netzgerät (120), erster Anzeigeinformationen in zwei höchsten Bits eines Modulations- und Codierungsschema-Felds, MCS-Felds, bei Uplinkerteilung einer Direktzugriffsantwort, wobei die ersten Anzeigeinformationen eine Anzahl wiederholter Übertragungen einer dritten Nachricht Msg 3 anzeigen, wobei die dritte Nachricht Msg 3 eine Funkressourcensteuerungsverbindungsanforderung, RRC-Verbindungsanforderung, in einem Direktzugriffsverfahren ist; und
Senden, durch das Netzgerät, der ersten Anzeigeinformationen an ein Endgerät (110).

8. Verfahren nach Anspruch 7, wobei die ersten Anzeigeinformationen ferner eine Art wiederholter Übertragung der Msg 3 anzeigen.

9. Verfahren nach Anspruch 7 oder 8, wobei unterschiedliche Zustandswerte der zwei höchsten Bits des MCS-Felds unterschiedlichen Anzahlen wiederholter Übertragungen der dritten Nachricht entsprechen.

10. Verfahren nach Anspruch 7 oder 8, wobei ein Produkt aus unterschiedlichen Zustandswerten der höchsten zwei Bits in dem MCS-Feld und ein wiederholter Übertragungsfaktor K unterschiedlichen Anzahlen wiederholter Übertragungen der dritten Nachricht entsprechen.

11. Verfahren nach einem der Ansprüche 7 bis 10, wobei das MCS-Feld vier Bits aufweist, die zwei niedrigsten Bits des MCS-Felds für einen MCS-Index bestimmt sind und die MCS-Indexwerte 0 bis 3 sind.

12. Verfahren nach einem der Ansprüche 7 bis 11, wobei das Endgerät ein Endgerät mit begrenzter Reichweite ist.

13. Kommunikationsvorrichtung, umfassend:
eine Empfangseinheit (401), die dazu konfiguriert ist, eine Uplinkerteilung einer Direktzugriffsantwort von einem Netzgerät zu empfangen, wobei die Uplinkerteilung der Direktzugriffsantwort ein Modulations- und Codierungsschema-Feld, MCS-Feld, beinhaltet; und
eine Verarbeitungseinheit (402), die zu Folgendem konfiguriert ist: Erlangen erster Anzeigeinformationen basierend auf zwei höchsten Bits des MCS-Felds, wobei die ersten Anzeigeinformationen eine Anzahl wiederholter Übertragungen einer dritten Nachricht Msg 3 anzeigen, wobei die dritte Nachricht Msg 3 eine Funkressourcensteuerungsverbindungsanforderung, RRC-Verbindungsanforderung, in einem Direktzugriffsverfahren ist;
und Bestimmen der Anzahl wiederholter Übertragungen der dritten Nachricht basierend auf den ersten Anzeigeinformationen.

14. Kommunikationsvorrichtung nach Anspruch 13, wobei die ersten Anzeigeinformationen ferner eine Art wiederholter Übertragung der Msg 3 anzeigen.

15. Kommunikationsvorrichtung nach Anspruch 13 oder 14, wobei die Verarbeitungseinheit (402) dazu konfiguriert ist, die Anzahl wiederholter Übertragungen der dritten Nachricht basierend auf dem Zustandswert der zwei höchsten Bits des MCS-Felds zu bestimmen.

16. Kommunikationsvorrichtung nach Anspruch 15, wobei die Verarbeitungseinheit (402) dazu konfiguriert ist, die Anzahl wiederholter Übertragungen der dritten Nachricht basierend auf dem Zustandswert der zwei höchsten Bits des MCS-Felds und einem wiederholten Übertragungsfaktor K zu bestimmen.

17. Kommunikationsvorrichtung nach einem der Ansprüche 13 bis 16, wobei das MCS-Feld vier Bits aufweist, zwei niedrigste Bits des MCS-Felds für einen MCS-Index bestimmt sind und die MCS-Indexwerte 0 bis 3 sind.

18. Kommunikationsvorrichtung, umfassend:
eine Verarbeitungseinheit (501), die dazu konfiguriert ist, erste Anzeigeinformationen in zwei höchsten Bits eines Modulations- und Codierungsschema-Felds, MCS-Felds, bei Uplinkerteilung einer Direktzugriffsantwort festzulegen, wobei die ersten Anzeigeinformationen eine Anzahl wiederholter Übertragungen einer dritten Nachricht Msg 3 anzeigen, wobei die dritte Nachricht Msg 3 eine Funkressourcensteuerungsverbindungsanforderung, RRC-Verbindungsanforderung, in einem Direktzugriffsverfahren ist; und
eine Sendeeinheit (502), die dazu konfiguriert ist, die ersten Anzeigeinformationen an eine Endgerätevorrichtung zu senden.

19. Kommunikationsvorrichtung nach Anspruch 18, wobei die ersten Anzeigeinformationen ferner eine Art wiederholter Übertragung der Msg 3 anzeigen.

20. Kommunikationsvorrichtung nach Anspruch 18 oder 19, wobei unterschiedliche Zustandswerte der zwei höchsten Bits des MCS-Felds unterschiedlichen Anzahlen wiederholter Übertragungen der dritten Nachricht entsprechen.

21. Kommunikationsvorrichtung nach Anspruch 18 oder 19, wobei ein Produkt aus unterschiedlichen Zustandswerten der höchsten zwei Bits in dem MCS-Feld und ein wiederholter Übertragungsfaktor K unterschiedlichen Anzahlen wiederholter Übertragungen der dritten Nachricht entsprechen.

22. Kommunikationsvorrichtung nach einem der Ansprüche 18 bis 21, wobei das MCS-Feld vier Bits aufweist, zwei niedrigste Bits des MCS-Felds für einen MCS-Index bestimmt sind und die MCS-Indexwerte 0 bis 3 sind.

23. Computerprogrammprodukt, umfassend Anweisungen, die, wenn sie durch einen Prozessor eines Endgeräts ausgeführt werden, das Endgerät dazu veranlassen, das Verfahren nach einem der Ansprüche 1 bis 6 durchzuführen und, wenn sie durch einen Prozessor eines Netzgeräts ausgeführt werden, das Netzgerät dazu veranlassen, das Verfahren nach einem der Ansprüche 7 bis 12 durchzuführen.

24. Chip, wobei der Chip mit einem Speicher verbunden ist oder der Chip den Speicher umfasst und dazu konfiguriert ist, Anweisungen, die in dem Speicher gespeichert sind, zu lesen und auszuführen, um das Verfahren nach einem der Ansprüche 1 bis 6 umzusetzen, wenn der Chip ein Chip eines Endgeräts ist, und um das Verfahren nach einem der Ansprüche 7 bis 12 umzusetzen, wenn der Chip ein Chip eines Netzgeräts ist.

## Revendications

1. Procédé de communication, dans lequel le procédé comprend :
la réception, par un dispositif terminal (110), d'une attribution de liaison montante d'une réponse d'accès aléatoire en provenance d'un dispositif réseau (120), dans lequel l'attribution de liaison montante de la réponse d'accès aléatoire comporte un champ de schéma de modulation et de codage, MCS ;
l'obtention, par le dispositif terminal, de premières informations d'indication sur la base de deux bits les plus élevés du champ MCS, dans lequel les premières informations d'indication indiquent une quantité de transmissions répétées d'un troisième message Msg 3, le troisième message Msg 3 est une requête de connexion de commande de ressources radio, RRC, dans une procédure d'accès aléatoire ; et
la détermination, par le dispositif terminal, de la quantité de transmissions répétées du troisième message sur la base des premières informations d'indication.

2. Procédé selon la revendication 1, dans lequel les premières informations d'indication indiquent en outre un type de transmission répétée du Msg 3.

3. Procédé selon la revendication 1 ou 2, dans lequel la détermination de la quantité de transmissions répétées du troisième message sur la base des premières informations d'indication comprend :
la détermination de la quantité de transmissions répétées du troisième message sur la base de la valeur d'état des deux bits les plus élevés du champ MCS.

4. Procédé selon la revendication 3, dans lequel la détermination de la quantité de transmissions répétées du troisième message sur la base de la valeur d'état des deux bits les plus élevés du champ MCS comprend :
la détermination de la quantité de transmissions répétées du troisième message sur la base de la valeur d'état des deux bits les plus élevés du champ MCS et d'un facteur K de transmission répété.

5. Procédé selon l'une quelconque des revendications 1 à 4, dans lequel le champ MCS comporte quatre bits, les deux bits les plus bas du champ MCS sont destinés à l'indice MCS, les valeurs de l'indice MCS vont de 0 à 3.

6. Procédé selon l'une quelconque des revendications 1 à 5, dans lequel le dispositif terminal est un dispositif terminal à couverture limitée.

7. Procédé de communication, comprenant :
le réglage, par un dispositif réseau (120), de premières informations d'indication dans deux bits les plus élevés d'un champ de schéma de modulation et de codage, MCS, lors de l'attribution de liaison montante d'une réponse d'accès aléatoire, dans lequel les premières informations d'indication indiquent une quantité de transmissions répétées d'un troisième message Msg 3, le troisième message Msg 3 est une requête de connexion de commande de ressources radio RRC dans une procédure d'accès aléatoire ; et
l'envoi, par le dispositif réseau, de premières informations d'indication à un dispositif terminal (110).

8. Procédé selon la revendication 7, dans lequel les premières informations d'indication indiquent en outre un type de transmission répétée du Msg 3.

9. Procédé selon la revendication 7 ou 8, dans lequel différentes valeurs d'état des deux bits les plus élevés du champ MCS correspondent à différentes quantités de transmissions répétées du troisième message.

10. Procédé selon la revendication 7 ou 8, dans lequel le produit de différentes valeurs d'état des deux bits les plus élevés dans le champ MCS et un facteur de transmission répétée K correspondent à différentes quantités de transmissions répétées du troisième message.

11. Procédé selon l'une quelconque des revendications 7 à 10, dans lequel le champ MCS comporte quatre bits, les deux bits les plus bas du champ MCS sont destinés à l'indice MCS, les valeurs de l'indice MCS vont de 0 à 3.

12. Procédé selon l'une quelconque des revendications 7 à 11, dans lequel le dispositif terminal est un dispositif terminal à couverture limitée.

13. Appareil de communication, comprenant :
une unité de réception (401), configurée pour recevoir une attribution de liaison montante d'une réponse d'accès aléatoire en provenance d'un dispositif réseau, dans lequel l'attribution de liaison montante de la réponse d'accès aléatoire comporte un champ de schéma de modulation et de codage, MCS ; et
une unité de traitement (402), configurée pour : obtenir des premières informations d'indication sur la base de deux bits les plus élevés du champ MCS, dans lequel les premières informations d'indication indiquent une quantité de transmissions répétées d'un troisième message Msg 3, le troisième message Msg 3 est une requête de connexion de commande de ressources radio, RRC, dans une procédure d'accès aléatoire ; et déterminer la quantité de transmissions répétées du troisième message sur la base des premières informations d'indication.

14. Appareil de communication selon la revendication 13, dans lequel les premières informations d'indication indiquent en outre un type de transmission répétée du Msg 3.

15. Appareil de communication selon la revendication 13 ou 14, dans lequel l'unité de traitement (402) est configurée pour déterminer la quantité de transmissions répétées du troisième message sur la base de la valeur d'état des deux bits les plus élevés du champ MCS.

16. Appareil de communication selon la revendication 15, dans lequel l'unité de traitement (402) est configurée pour déterminer la quantité de transmissions répétées du troisième message sur la base de la valeur d'état des deux bits les plus élevés du champ MCS et d'un facteur de transmission répétée K.

17. Appareil de communication selon l'une quelconque des revendications 13 à 16, dans lequel le champ MCS comporte quatre bits, les deux bits les plus bas du champ MCS sont destinés à l'indice MCS, les valeurs de l'indice MCS sont de 0 à 3.

18. Appareil de communication, comprenant :
une unité de traitement (501), configurée pour régler des premières informations d'indication dans deux bits les plus élevés d'un champ de schéma de modulation et de codage, MCS, lors de l'attribution de liaison montante d'une réponse d'accès aléatoire, dans lequel les premières informations d'indication indiquent une quantité de transmissions répétées d'un troisième message Msg 3, le troisième message Msg 3 est une requête de connexion de commande de ressources radio RRC dans une procédure d'accès aléatoire ; et
une unité d'envoi (502), configurée pour envoyer les premières informations d'indication à un dispositif terminal.

19. Appareil de communication selon la revendication 18, dans lequel les premières informations d'indication indiquent en outre un type de transmission répétée du Msg 3.

20. Appareil de communication selon la revendication 18 ou 19, dans lequel différentes valeurs d'état des deux bits les plus élevés du champ MCS correspondent à différentes quantités de transmissions répétées du troisième message.

21. Appareil de communication selon la revendication 18 ou 19, dans lequel le produit de différentes valeurs d'état des deux bits les plus élevés dans le champ MCS et un facteur de transmission répétée K correspondent à différentes quantités de transmissions répétées du troisième message.

22. Appareil de communication selon l'une quelconque des revendications 18 à 21, dans lequel le champ MCS comporte quatre bits, les deux bits les plus bas du champ MCS sont destinés à l'indice MCS, les valeurs de l'indice MCS sont de 0 à 3.

23. Produit de programme informatique comprenant des instructions qui, lorsqu'elles sont exécutées par un processeur d'un dispositif terminal, amènent le dispositif terminal à mettre en œuvre le procédé selon l'une quelconque des revendications 1 à 6 et, lorsqu'elles sont exécutées par un processeur d'un dispositif réseau, amènent le dispositif réseau à mettre en œuvre le procédé selon l'une quelconque des revendications 7 à 12.

24. Puce, dans laquelle la puce est connectée à une mémoire ou la puce comprend la mémoire, et est configurée pour lire et exécuter des instructions stockées dans la mémoire, pour mettre en œuvre le procédé selon l'une quelconque des revendications 1 à 6, lorsque la puce est une puce d'un dispositif terminal et pour mettre en œuvre le procédé selon l'une quelconque des revendications 7 à 12, lorsque la puce est une puce d'un dispositif réseau.
